# EUROPÄISCHE PATENTANMELDUNG

(11) **EP 1 355 074 A1**
(43) Veröffentlichungstag der Anmeldung: **22.10.2003**
(21) Anmeldenummer: 02405319.1
(22) Anmeldetag: 18.04.2002
(51) Int. Cl.: F16D 63/00, B23Q 1/28, F16H 19/00, F16H 19/04, B25J 19/00

(54) **Linearantrieb**

(71) Anmelder: Güdel AG Antriebs- und Lineartechnik, 4900 Langenthal (CH)
(72) Erfinder: Güdel, Rudolf, 4500 Solothurn (CH); Zulauf, Walter, 4937 Ursenbach (CH)
(74) Vertreter: Roshardt, Werner Alfred, Dipl.-Phys.

(57) **Zusammenfassung**

Eine Linearachse (5) ist mit einer eine Längsrichtung definierenden Führungsschiene (10), einem längs zur Führungsschiene (10) verfahrbaren Fahrglied (20), einer Antriebsvorrichtung (12, 30) zum wahlweisen Bewegen und Positionieren des Fahrgliedes (20) längs zur Führungsschiene (10) und einer Sicherheits-Arretiervorrichtung (12, 40, 50, 51, 52, 53) versehen, welche zum Arretieren des Fahrgliedes (20) bezüglich der Führungsschiene (10) unabhängig vom Zustand der Antriebsvorrichtung (12, 30) ausgebildet ist. Die Sicherheits-Arretiervorrichtung (12, 40, 50, 51, 52, 53) umfasst eine Zahnstange (12), die längs zur Führungsschiene (10) an einem ersten Teil eines aus der Führungsschiene (10) und dem Fahrglied (20) gebildeten Teilepaares fest angebracht ist, ein Zahnrad (40), das in einer mit der Zahnstange (10) kämmenden Anordnung um eine bezüglich dem anderen, zweiten Teil des Teilepaares feste Drehachse (45) drehbar angeordnet ist und eine zum Bremsen des Zahnrads (40) ausgebildete Bremsvorrichtung (50, 51, 52, 53). Dadurch wird die Sicherheit im Falle eines Versagens und/oder im Falle einer gewollten Ausserbetriebsetzung der Antriebsvorrichtung (12, 30) verbessert.

## Beschreibung

### Technisches Gebiet

Die Erfindung betrifft eine Linearachse gemäss dem Oberbegriff des Anspruchs 1 und ein Verfahren für den Betrieb einer solchen.

### Stand der Technik

Unter einer Linearachse wird eine Vorrichtung verstanden, die dazu dient, ein Fahrglied mit einem translatorischen Bewegungsfreiheitsgrad bezüglich einer Basis entlang einer linearen Bewegungsachse zu bewegen und zu positionieren. Typische Anwendungsgebiete für Linearachsen sind Werkzeugmaschinen und Roboter.

Üblicherweise weist eine Linearachse eine Führungsschiene auf, ein längs zur Führungsschiene verfahrbares Fahrglied und eine Antriebsvorrichtung zum wahlweisen Bewegen und Positionieren des Fahrgliedes längs zur Führungsschiene. Zum Positionieren des Fahrgliedes an einer vorgegebenen Stelle ist es erforderlich, dass die Antriebsvorrichtung das Fahrglied längs zur Führungsschiene sowohl beschleunigen als auch verzögern (d.h. bremsen) kann. Im Zusammenhang mit der vorliegenden Beschreibung und den Ansprüchen wird deshalb unter einer Antriebsvorrichtung, die zum wahlweisen Bewegen und Positionieren eines Fahrgliedes längs zu einer Führungsschiene geeignet ist, eine Antriebsvorrichtung verstanden, welche sowohl zum Beschleunigen als auch zum Bremsen des Fahrgliedes in einer geradlinigen Bewegung längs zur Führungsschiene ausgebildet ist. In der Regel ist eine solche Antriebsvorrichtung zudem derart ausgebildet, dass sie das Fahrglied auch geradlinig gleichförmig (d.h. mit konstanter Geschwindigkeit) längs zur Führungsschiene bewegen kann.

Für Linearachsen gibt es eine Vielzahl von unterschiedlichen Antriebsvorrichtungen. Antriebsvorrichtungen auf der Basis von Hydraulikantrieben, Spindel-Mutter-Trieben, Seilzügen, elektromagnetischen Direktantrieben oder Zahnrad-Zahnstangen-Antrieben weisen den Vorteil auf, dass sie sowohl zum Beschleunigen als auch zum Bremsen und exakten Positionieren geeignet sind. Sie sind aber relativ teuer. Antriebsvorrichtungen auf der Basis von Pneumatikantrieben sind zwar billiger, sie müssen aber nebst den lediglich für die Grobpositionierung geeigneten Pneumatikantrieben weiter eine Bremsvorrichtung aufweisen, um das exakte Positionieren zu ermöglichen. Eine solche Antriebsvorrichtung auf der Basis eines pneumatischen Antriebs und einer Zahnrad und Zahnstange umfassenden Bremsvorrichtung ist z.B. in der amerikanischen Patentschrift US 4 339 984 beschrieben.

Um bei Ausfall der Antriebsvorrichtung zu verhindern, dass das Fahrglied in unkontrollierter Weise weiterfährt, ist es bekannt, Linearachsen zusätzlich mit einer Sicherheits-Arretiervorrichtung auszurüsten, welche zum Arretieren des Fahrgliedes bezüglich der Führungsschiene unabhängig vom Zustand der Antriebsvorrichtung ausgebildet ist. Solche Sicherheits-Arretiervorrichtungen sind namentlich bei fallenden Linearachsen, insbesondere bei vertikal angeordneten Linearachsen gebräuchlich. Ohne Sicherheits-Arretiervorrichtung besteht bei diesen die Gefahr, dass bei ausser Betrieb gesetzter Antriebsvorrichtung (z.B. im Zuge einer Wartung oder Einrichtung der Linearachse oder infolge eines störungsbedingten Ausfalls der Antriebsvorrichtung) das Fahrglied allein aufgrund der Schwerkraft nach unten fällt und zu Beschädigungen von Einrichtungen und/oder Verletzungen von Personen führt.

Aus der europäischen Patentanmeldung EP 0 936 366 A2 ist eine Sicherheits-Arretiervorrichtung für eine auf einem Lineardirektantrieb basierende Linearachse bekannt, die einen längs einer Führungsschiene verfahrbaren Tragkörper umfasst. Die Sicherheits-Arretiervorrichtung ist mit einem elektromechanischen Kraftwandler in Form eines Piezoaktuators versehen, welcher auf am Tragkörper angeordnete Bremsbacken wirkt, um bei Betätigung des Piezoaktuators ein Festklemmen des Tragkörpers an der Führungsschiene zu bewirken.

In der deutschen Patentschrift DE 43 13 900 C1 ist ein mit einer vertikalen Linearachse versehener Schraubstock beschrieben, der einen an einer vertikal verlaufenden Führungsschiene verfahrbaren Spannschlitten umfasst. Zur Sicherung gegen ein Herabfallen des Spannschlittens ist eine Sicherheits-Arretiervorrichtung vorgesehen, welche einen unter Federspannung stehenden Bolzen umfasst, der in einer Bohrung des Schlittens oder der Führungsschiene angeordnet ist und dessen Stirnfläche gegen eine Führungsfläche der Führungsschiene bzw. des Schlittens wirkt, um den Schlitten mittels Reibungskraft bezüglich der Führungsschiene festzuklemmen und dadurch zu arretieren.

Weiter sind Sicherheits-Arretiervorrichtungen bekannt, welche einen am Fahrglied angeordneten Steckbolzen umfassen, der mittels Federkraft in eines aus einer Mehrzahl in der Führungsschiene ausgebildeten Langlöcher einsteckbar ist, um das Fahrglied bezüglich der Führungsschiene zu arretieren.

Die bisher bekannten Sicherheits-Arretiervorrichtungen für Linearachsen vermögen hinsichtlich der Sicherheit im Falle eines Versagens der Antriebsvorrichtung nicht vollauf zu befriedigen. Sicherheits-Arretiervorrichtungen des Typs, bei denen das Fahrglied mittels Reibungskraft an der Führungsschiene festgeklemmt wird, versagen im Falle einer übermässigen Verschmutzung der Führungsschiene und/oder im Falle einer irrtümlichen Schmierung der Führungsschiene. Sicherheits-Arretiervorrichtungen des Typs mit einem in ein Langloch einsteckbaren Steckbolzen sind zwar weniger anfällig auf Verschmutzung und/oder irrtümliches Schmieren. Sie vermögen jedoch das Fahrglied im Falle eines Versagens der Antriebsvorrichtung nicht in jeder beliebigen Fahrgliedposition sofort zu arretieren. Das Fahrglied fährt vielmehr zunächst um eine als Nachlaufstrecke bezeichnete Strecke weiter, bis der Steckbolzen die Position des nächsten Langlochs erreicht hat. Diese Nachlaufstrecke ist bei vielen Anwendungen bereits zu gross, um die Gefahr von Materialund/oder Personenschäden im gewünschten Ausmass verhindern zu können.

### Darstellung der Erfindung

Aufgabe der Erfindung ist die Verbesserung der Sicherheit im Falle eines Versagens und/oder im Falle einer gewollten Ausserbetriebsetzung der Antriebsvorrichtung einer Linearachse des Typs, die mit einer Antriebsvorrichtung und einer Sicherheits-Arretiervorrichtung versehen ist.

Die Lösung der Aufgabe ist durch die Merkmale des Anspruchs 1 definiert. Gemäss der Erfindung weist eine Linearachse eine Führungsschiene auf, die eine Längsrichtung definiert, ein längs zur Führungsschiene verfahrbares Fahrglied, eine Antriebsvorrichtung zum wahlweisen Bewegen und Positionieren des Fahrgliedes längs zur Führungsschiene und eine Sicherheits-Arretiervorrichtung, welche zum Arretieren des Fahrgliedes bezüglich der Führungsschiene unabhängig vom Zustand der Antriebsvorrichtung ausgebildet ist. Die Sicherheits-Arretiervorrichtung umfasst eine Zahnstange, die längs zur Führungsschiene an einem ersten Teil eines aus der Führungsschiene und dem Fahrglied gebildeten Teilepaares fest angebracht ist, ein Zahnrad, das in einer mit der Zahnstange kämmenden Anordnung um eine bezüglich dem anderen, zweiten Teil des Teilepaares feste Drehachse drehbar angeordnet ist und eine zum Bremsen des Zahnrads bezüglich der Drehachse bzw. dem zweiten Teil des Teilepaares ausgebildete Bremsvorrichtung.

Im vorliegenden Zusammenhang wird ohne anderslautende Erklärungen unter einer Drehachse stets eine geometrische Achse verstanden, d.h. eine Achse im mathematischen Sinn. Die (geometrische) Drehachse, um welche herum das Zahnrad drehbar ist, kann zwar konkret mittels einer mechanischen Drehachse verwirklicht sein, die fest am zweiten Teil des Teilepaares (d.h. am Fahrglied oder an der Führungsschiene) angebracht ist. Sie kann aber auch mittels einer Welle, eines oder mehrerer Achszapfen, die mit entsprechenden Zapfenlagern zusammenwirken oder anderer geeigneter Drehgelenkmittel verwirklicht sein.

Durch das Zahnrad und die Zahnstange wird einerseits eine formschlüssig zwischen der Führungsschiene und dem Fahrglied wirkende Sicherheits-Arretiervorrichtung geschaffen, welche weitgehend unempfindlich auf Verschmutzung und/oder unsachgemässe Schmierung ist. Andererseits bleibt während des Verfahrens des Fahrgliedes bezüglich der Führungsschiene das Zahnrad stets im Eingriff mit der Zahnstange, wobei es bei gelöster Bremsvorrichtung quasi im Freilauf um die Achse mitgedreht wird. Erforderlichenfalls kann durch eine Betätigung der Bremsvorrichtung das Zahnrad jederzeit blockiert und dadurch das Fahrglied sofort in jeder beliebigen Position bezüglich der Führungsschiene arretiert werden, ohne dass zunächst eine Nachlaufstrecke weitergefahren werden muss. Das heisst, es wird eine stufenlose Sicherheits-Arretiervorrichtung geschaffen. Dabei ist die Bremsvorrichtung derart ausgebildet, dass sie völlig unabhängig von der Antriebsvorrichtung betätigbar ist. Sie ist insbesondere auch dann betätigbar, wenn die Antriebsvorrichtung z.B. aufgrund eines Stromausfalls, einer anderen Panne oder zum Zwecke von Wartungs- oder Einrichtungsarbeiten ausser Betrieb gesetzt ist. Im Vergleich zu herkömmlichen Sicherheits-Arretiervorrichtungen wird dadurch namentlich bei fallend und insbesondere bei vertikal angeordneten Führungsschienen eine Verbesserung der Sicherheit erreicht.

Vorzugsweise umfasst die Bremsvorrichtung eine Bremse, die in einem im Wesentlichen geschlossenem Gehäuse angeordnet ist, welches an dem mit dem Zahnrad der Sicherheits-Arretiervorrichtung versehenen zweiten Teil des aus dem Fahrglied und der Führungsschiene gebildeten Teilpaares angebracht bzw. mit diesem zweiten Teil verbunden ist. Das Gehäuse ermöglicht einen wirksamen Schutz der Bremse vor Verschmutzung. Grundsätzlich sind jedoch auch andere Massnahmen zur Verhinderung einer Verschmutzung der Bremse möglich, oder es kann eine auf Verschmutzung weitgehend unempfindliche Bremse verwendet werden. Weiter kann mitunter im Falle einer sauberen Betriebsumgebung auf Schutzmassnahmen gegen eine Verschmutzung der Bremsvorrichtung gänzlich verzichtet werden.

Die Bremsvorrichtung kann eine mit wenigstens einer Bremsscheibe und einer Bremszange versehene Scheibenbremse umfassen. Solche Scheibenbremsen werden im Fahrzeug- und Maschinenbau für eine Vielzahl von unterschiedlichen Bremsanwendungen weit verbreitet eingesetzt, da sie vergleichsweise effizient, wartungsfreundlich und kostengünstig sind. Als Alternative und/oder in Ergänzung zu Scheibenbremsen können aber auch andere Bremsen für die Sicherheits-Arretiervorrichtung der erfindungsgemässen Linearachse verwendet werden, wie z.B. Trommelbremsen, Wirbelstrombremsen o.ä.

Im Falle einer Scheibenbremse ist deren Bremsscheibe vorteilhafterweise drehfest an einer Zahnradwelle angebracht, die ihrerseits drehfest mit dem Zahnrad der Sicherheits-Arretiervorrichtung verbunden ist. Dadurch wird eine besonders einfache und kompakte Konstruktion erreicht. Als Alternative kann die Bremse jedoch auch auf andere geeignete Art direkt oder indirekt (z.B. über ein Bremsgetriebe) mit dem Zahnrad der Sicherheits-Arretiervorrichtung gekoppelt sein.

Eine Linearachse gemäss einer bevorzugten Ausführungsart der Erfindung ist weiter mit Bremssensormittel zur Messung des Bremszustandes der Bremsvorrichtung und mit Antriebssteuerungsmittel zur Steuerung der Antriebsvorrichtung der Linearachse versehen.

Dabei sind die Bremssensormittel derart ausgebildet, dass sie ein dem Bremszustand entsprechendes Bremssignal erzeugen und dieses an die Antriebssteuerungsmittel weitergeben. Die Antriebssteuerungsmittel ihrerseits sind derart ausgebildet, dass sie in Abhängigkeit dieses Bremssignals (d.h. wenn das Bremssignal eine Betätigung der Bremsvorrichtung anzeigt) eine Betätigung der Antriebsvorrichtung zum Verfahren des Fahrgliedes bezüglich der Führungsschiene verhindern. Im Falle einer Scheibenbremse können die Bremssensormittel z.B. zum Messen des Luftspaltes zwischen einer Bremsscheibe und der zugeordneten Bremszange ausgebildet sein.

Gemäss einer bevorzugten Erfindungsvariante ist die Linearachse mit einer Antriebsvorrichtung versehen, die eine Zahnstange umfasst, welche längs zur Führungsschiene entweder an der Führungsschiene oder am Fahrglied fest angebracht ist, sowie ein Zahnrad, das in einer mit der Zahnstange kämmenden Anordnung um eine Drehachse drehbar angeordnet ist, welche im Falle einer fest an der Führungsschiene angebrachten Zahnstange fest bezüglich dem Fahrglied und im Falle einer fest am Fahrglied angebrachten Zahnstange fest bezüglich der Führungsschiene ist. Antriebsvorrichtungen dieses Typs sind besonders gut für Linearachsen gemäss der Erfindung geeignet. Grundsätzlich können jedoch auch andere Antriebsvorrichtungen für erfindungsgemässe Linearachsen verwendet werden.

Im Falle der oben erwähnten Erfindungsvariante mit einer Antriebsvorrichtung auf der Basis von Zahnstange und Zahnrad ist vorteilhafterweise die Zahnstange der Antriebsvorrichtung gleichzeitig auch als Zahnstange der Sicherheits-Arretiervorrichtung ausgebildet. Daraus ergibt sich eine kompakte und platzsparende Konstruktion der Linearachse.

Weiter können in diesem Fall das Zahnrad der Sicherheits-Arretiervorrichtung und das Zahnrad der Antriebsvorrichtung an voneinander distanzierten Stellen angeordnet sein, so dass sie gleichzeitig an zwei verschiedenen Stelle in die Zahnstange eingreifen. Dadurch wird eine zusätzliche Sicherheit erreicht, denn es ist unwahrscheinlich, dass die Zahnstange - z.B. infolge übermässiger Abnutzung - gleichzeitig an zwei verschiedenen Stellen bricht oder auf andere Art versagt.

Als Alternative zu den an verschiedenen Stellen angeordneten Zahnrädern, der Antriebsvorrichtung einerseits und der Sicherheits-Arretiervorrichtung andererseits, kann im Falle einer gemeinsamen Zahnstange für die Antriebsvorrichtung und die Sicherheits-Arretiervorrichtung aber auch das Zahnrad der Antriebsvorrichtung gleichzeitig als Zahnrad der Sicherheits-Arretiervorrichtung ausgebildet sein. Daraus ergibt sich eine besonders kompakte und platzsparende Konstruktion der Linearachse.

Vorzugsweise wird, um die Bremsvorrichtung der Sicherheits-Arretiervorrichtung einer erfindungsgemässen Linearachse von Zeit zu Zeit zu kontrollieren, das Fahrglied zunächst mittels der Sicherheits-Arretiervorrichtung bezüglich der Führungsschiene arretiert und danach bei arretiertem Fahrglied mittels der Antriebsvorrichtung eine vordefinierte, zwischen dem Fahrglied und der Führungsschiene wirkende Antriebskraft ausgeübt. Auf diese Weise kann auf einfache Art und mit einem minimalen Zeitaufwand, welcher den Betrieb der Linearachse kaum stört, die Funktionsfähigkeit der Bremsvorrichtung bedarfsweise immer wieder kontrolliert bzw. überprüft werden, was die Sicherheit beim Betrieb der Linearachse zusätzlich erhöht.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Linearachse gemäss einer bevorzugten Ausführungsart der Erfindung in einer vereinfachten, schematischen Teilansicht von der Seite;
- Fig. 2: eine vereinfachte, schematische Querschnittansicht entlang der Linie A-A in Fig. 1.

Grundsätzlich sind in den Figuren gleiche Teile mit gleichen Bezugszeichen versehen.

### Wege zur Ausführung der Erfindung

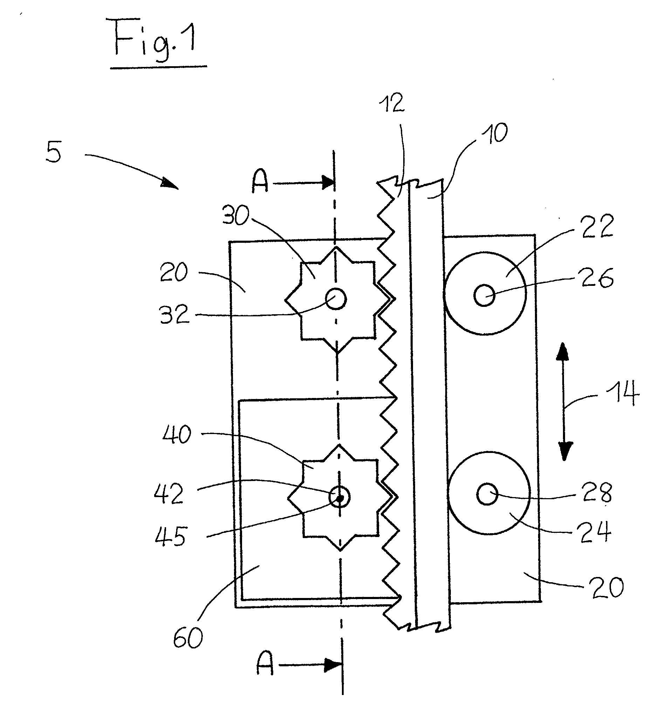

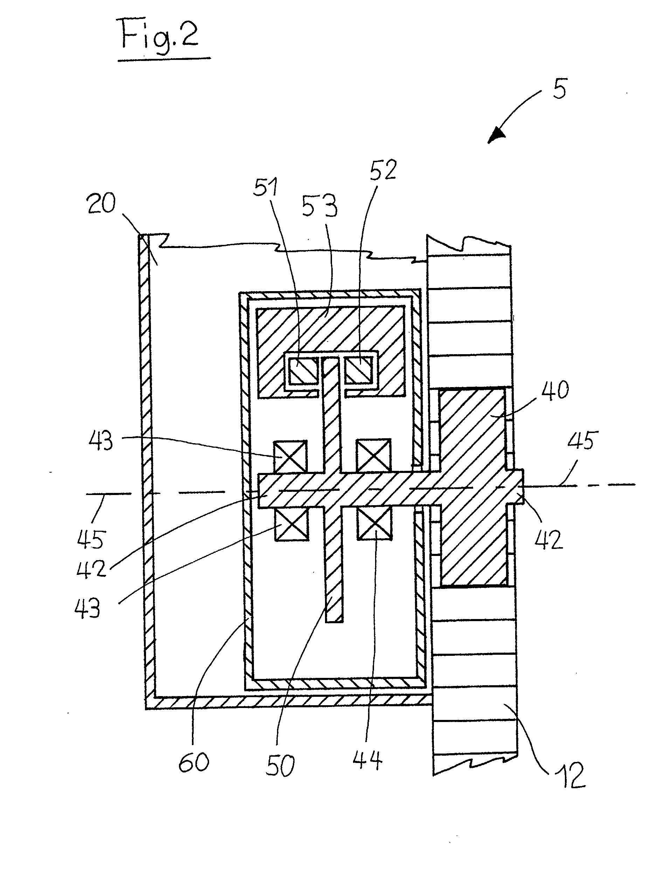

Die in den Figuren 1 und 2 in Teilansichten dargestellte Linearführung weist eine längliche Führungsschiene 10 auf, die im Wesentlichen vertikal verlaufend fest an einem Gestell (nicht dargestellt) einer Werkzeugmaschine (nicht dargestellt) angeordnet ist. An der Vorderseite der Führungsschiene 10 ist eine sich in Längsrichtung der Führungsschiene 10 (d.h. vertikal) erstreckende Zahnstange 12 fest angebracht, welche im Wesentlichen die gesamte Vorderseite der Führungsschiene 10 bedeckt. Die Zahnstange 12 ist an ihrer Vorderseite mit quer zur Längsrichtung (d.h. im Wesentlichen horizontal) verlaufenden Kämmen und Nuten versehen, welche die Zähne der Zahnstange 12 definieren. Sie ist Bestandteil sowohl der nachfolgend beschriebenen Antriebsvorrichtung als auch der weiter hinten beschriebenen Arretiervorrichtung der Linearachse 5.

Die Linearführung 5 weist weiter ein Fahrglied in Form eines Schlittens 20 auf, welcher längs zur Führungsschiene 10 (d.h. im Wesentlichen in vertikaler Richtung) entlang derselben verfahrbar ist, wie es in Fig. 1 durch den Doppelpfeil 14 dargestellt ist. Der Schlitten 20 ist zur Halterung einer Frässpindel (nicht dargestellt) der mit der Linearführung 5 versehenen Werkzeugmaschine ausgebildet. Er weist Führungsrollen 22, 24 auf, die um fest am Schlitten 20 angebrachte Achszapfen 26, 28 drehbar derart gelagert sind, dass sie auf der Rückseite der Führungsschiene 10 abrollen und dadurch den Schlitten 20 entlang der Führungsschiene 10 führen.

Zum wahlweisen Bewegen und Positionieren des Schlittens 20 längs zur Führungsschiene 10 (d.h. in vertikaler Richtung) ist eine Antriebsvorrichtung vorgesehen, die nebst der Zahnstange 12 weiter ein Zahnrad 30 aufweist. Das Zahnrad 30 ist drehfest an einer Zahnradwelle 32 angebracht, welche in Wälzlagern (nicht dargestellt) um eine horizontale (geometrische) Drehachse drehbar gelagert ist, wobei diese Wälzlager am Schlitten 20 angeordnet sind, so dass die Drehachse fest ist bezüglich dem Schlitten 20. Das Zahnrad 30 und die Zahnradwelle 32 der Antriebsvorrichtung sind in einer mit der Zahnstange 12 kämmenden Anordnung am Schlitten 20 angeordnet. Die Antriebsvorrichtung umfasst weiter einen auf dem Schlitten 20 angeordneten Antriebs- und Stellmotor (nicht dargestellt), der zum Antreiben und Bremsen der Zahnradwelle 32 derart ausgebildet ist, dass mittels des Motors deren Drehlage auch unter Last exakt eingestellt werden kann. Insgesamt ermöglicht die das Zahnrad 30, die Zahnstange 12 und den Motor umfassende Antriebsvorrichtung ein wahlweises Bewegen und Positionieren des Schlittens 20 längs zur Führungsschiene 10.

Die in den Figuren 1 und 2 dargestellte Linearachse 5 ist weiter mit einer Sicherheits-Arretiervorrichtung ausgerüstet, welche zum Arretieren des Schlittens 20 bezüglich der Führungsschiene 10 unabhängig vom Zustand der Antriebsvorrichtung ausgebildet ist. Die Sicherheits-Arretiervorrichtung weist nebst der Zahnstange 12 weiter ein Zahnrad 40 auf. Das Zahnrad 40 ist drehfest an einer Zahnradwelle 42 angebracht, welche in Wälzlagern 43, 44 um eine horizontale (geometrische) Drehachse 45 drehbar gelagert ist, wobei diese Wälzlager 43, 44 am Schlitten 20 angeordnet sind, so dass die Drehachse 45 fest ist bezüglich dem Schlitten 20. Das Zahnrad 40 und die Zahnradwelle 42 der Sicherheits-Arretiervorrichtung sind in einem Abstand von ungefähr 10 cm unterhalb des Zahnrads 30 bzw. der Zahnradwelle 32 der Antriebsvorrichtung in einer mit der Zahnstange 12 kämmenden Anordnung am Schlitten 20 angeordnet.

An der Zahnradwelle 42 des Zahnrads 40 der Sicherheits-Arretiervorrichtung ist weiter die Bremsscheibe 50 einer Scheibenbremse drehfest angebracht, welche Bestandteil der Sicherheits-Arretiervorrichtung ist. Die Ebene der Bremsscheibe 50 ist normal zur Zahnradwelle 42 (d.h. vertikal) angeordnet, an welcher die Bremsscheibe 50 angebracht ist. Die Scheibenbremse umfasst weiter einen mit dem Schlitten 20 verbundenen Sattel 53, der mit zylindrischen Ausnehmungen versehen ist, in welchen mit Reibbelägen versehene Kolben 51, 52 aufgenommen sind. Die Kolben 51, 52 sind hydraulisch betätigbar, um von entgegengesetzten Richtungen auf die Aussenflächen der Bremsscheibe 50 zu drücken und diese dadurch mittels Reibungskraft zu bremsen. Insgesamt ermöglicht die das Zahnrad 40, die Zahnstange 12 und die Scheibenbremse 50, 51, 52, 53 umfassende Sicherheits-Arretiervorrichtung ein Arretieren des Schlittens 20 bezüglich der Führungsschiene 10 unabhängig vom Zustand der Antriebsvorrichtung der Linearachse 5.

Die gesamte Scheibenbremse, d.h. die Bremsscheibe 50, der Bremssattel 53 und die Bremskolben 51, 52, ist in einem Bremsgehäuse 60 angeordnet, welches am Schlitten 20 fest angebracht ist. Das Bremsgehäuse 60 umschliesst auch einen Teil der Zahnradwelle 42 und die Wälzlager 43, 44, in denen die Zahnradwelle 42 gelagert ist. Es ist bis auf einen Durchgang für die Zahnradwelle im Wesentlichen geschlossen. Durch das im Wesentlichen geschlossene Bremsgehäuse 60 wird die Scheibenbremse 50, 51, 52, 53 wirksam vor Verschmutzung geschützt.

Die Linearachse 5 ist weiter mit einem optischen Sensor (nicht dargestellt) versehen, welcher den Luftspalt zwischen einem der Kolben 51, 52 und der Bremsscheibe 50 misst und in Abhängigkeit dieser Messung ein Bremssignal erzeugt, das anzeigt, ob sich die Bremse in einer bremsenden oder in einer gelösten Stellung befindet. Dieses Bremssignal wird an eine Antriebssteuerungseinheit (nicht dargestellt) weitergegeben, welche die Antriebsvorrichtung 12, 30 der Linearachse 5 derart steuert, dass eine Betätigung dieser Antriebsvorrichtung 12, 30 verhindert wird, wenn sich die Bremse 50, 51, 52, 53 in einer bremsenden Stellung befindet.

Um die Funktionsfähigkeit der gesamten Sicherheits-Arretiervorrichtung und insbesondere der Scheibenbremse 50, 51, 52, 53 von Zeit zu Zeit zu überprüfen, wird jeweils nach einer vorgegebenen Anzahl von Betriebsstunden zunächst der Schlitten 20 mittels der Scheibenbremse 50, 51, 52, 53, dem Zahnrad 40 der Sicherheits-Arretiervorrichtung und der Zahnstange 12 bezüglich der Führungsschiene 10 arretiert. Danach bei arretiertem Schlitten 20 mittels der Antriebsvorrichtung 12, 30 eine vordefinierte Antriebskraft auf den Schlitten 20 ausgeübt und überprüft, ob die Sicherheits-Arretiervorrichtung dieser Antriebskraft zu widerstehen vermag.

Zusammenfassend ist festzustellen, dass durch die Erfindung die Sicherheit im Falle eines Versagens und/oder im Falle einer gewollten Ausserbetriebsetzung der Antriebsvorrichtung einer Linearachse des Typs, die mit einer Antriebsvorrichtung und einer Sicherheits-Arretiervorrichtung versehen ist, verbessert wird.

## Patentansprüche

1. Linearachse (5) mit einer eine Längsrichtung definierenden Führungsschiene (10), einem längs zur Führungsschiene (10) verfahrbaren Fahrglied (20), einer Antriebsvorrichtung (12, 30) zum wahlweisen Bewegen und Positionieren des Fahrgliedes (20) längs zur Führungsschiene (10) und einer Sicherheits-Arretiervorrichtung (12, 40, 50, 51, 52, 53), welche zum Arretieren des Fahrgliedes (20) bezüglich der Führungsschiene (10) unabhängig vom Zustand der Antriebsvorrichtung (12, 30) ausgebildet ist, **dadurch gekennzeichnet, dass** die Sicherheits-Arretiervorrichtung (12, 40, 50, 51, 52, 53) eine Zahnstange (12) umfasst, die längs zur Führungsschiene (10) an einem ersten Teil eines aus der Führungsschiene (10) und dem Fahrglied (20) gebildeten Teilepaares fest angebracht ist, ein Zahnrad (40), das in einer mit der Zahnstange (12) kämmenden Anordnung um eine bezüglich dem anderen, zweiten Teil des Teilepaares feste Drehachse (45) drehbar angeordnet ist und eine zum Bremsen des Zahnrads (40) ausgebildete Bremsvorrichtung (50, 51, 52, 53).

2. Linearachse (5) nach Anspruch 1, **dadurch gekennzeichnet, dass** die Bremsvorrichtung (50, 51, 52, 53) eine in einem im Wesentlichen geschlossenem Gehäuse (60) angeordnete Bremse (50, 51, 52, 53) umfasst, wobei das Gehäuse (60) mit dem zweiten Teil des Teilpaares verbunden ist.

3. Linearachse (5) nach Anspruch 1 oder 2, **dadurch gekennzeichnet, dass** die Bremsvorrichtung (50, 51, 52, 53) eine Scheibenbremse (50, 51, 52, 53) mit wenigstens einer Bremsscheibe (50) umfasst.

4. Linearachse (5) nach Anspruch 3, **dadurch gekennzeichnet, dass** die Bremsscheibe (50) drehfest an einer drehfest mit dem Zahnrad (40) verbundenen Zahnradwelle (42) angebracht ist.

5. Linearachse (5) nach einem der Ansprüche 1 bis 4, **dadurch gekennzeichnet, dass** weiter Bremssensormittel zur Messung des Bremszustandes der Bremsvorrichtung (50, 51, 52, 53) vorgesehen sind und Antriebssteuerungsmittel zur Steuerung der Antriebsvorrichtung (12, 30), wobei die Bremssensormittel und die Antriebssteuerungsmittel derart ausgebildet sind, dass die Bremssensormittel ein dem Bremszustand entsprechendes Bremssignal erzeugen und die Antriebssteuerungsmittel in Abhängigkeit dieses Bremssignals eine Betätigung der Antriebsvorrichtung (20, 30) zum Verfahren des Fahrgliedes (20) bezüglich der Führungsschiene (10) verhindern.

6. Linearachse (5) nach einem der Ansprüche 1 bis 5, **dadurch gekennzeichnet, dass** die Antriebsvorrichtung (12, 30) eine Zahnstange (12) umfasst, die längs zur Führungsschiene (10) entweder an der Führungsschiene (10) oder am Fahrglied (20) fest angebracht ist sowie ein Zahnrad (30), das in einer mit der Zahnstange (12) kämmenden Anordnung um eine Drehachse drehbar angeordnet ist, welche fest ist entweder bezüglich dem Fahrglied (20) oder bezüglich der Führungsschiene (10).

7. Vorrichtung nach Anspruch 6, **dadurch gekennzeichnet, dass** die Zahnstange (12) der Antriebsvorrichtung (12, 30) gleichzeitig auch als Zahnstange (12) der Sicherheits-Arretiervorrichtung (12, 40, 50, 51, 52, 53) ausgebildet ist.

8. Vorrichtung nach Anspruch 7, **dadurch gekennzeichnet, dass** das Zahnrad (40) der Sicherheits-Arretiervorrichtung (12, 40, 50, 51, 52, 53) an einer vom Zahnrad (30) der Antriebsvorrichtung (12, 30) distanzierten Stelle angeordnet ist.

9. Vorrichtung nach Anspruch 7, **dadurch gekennzeichnet, dass** das Zahnrad der Antriebsvorrichtung gleichzeitig auch als Zahnrad der Sicherheits-Arretiervorrichtung ausgebildet ist.

10. Verfahren für den Betrieb einer Linearachse (5) nach einem der Ansprüche 1 bis 9, **dadurch gekennzeichnet, dass** zum Zwecke von wiederholten Kontrollen der Bremsvorrichtung (50, 51, 52, 53) das Fahrglied (12) mittels der Sicherheits-Arretiervorrichtung (12, 40, 50, 51, 52, 53) bezüglich der Führungsschiene (10) arretiert und gleichzeitig mittels der Antriebsvorrichtung (12, 30) eine vordefinierte, zwischen dem Fahrglied (20) und der Führungsschiene (10) wirkende Antriebskraft ausgeübt wird.
